Europäisches Patentamt

European Patent Office

Office européen des brevets

(11) Veröffentlichungsnummer: **0 377 087**
**A2**

## (12) EUROPÄISCHE PATENTANMELDUNG

(21) Anmeldenummer: **89118786.6**

(22) Anmeldetag: **10.10.89**

(51) Int. Cl.⁵: **B09B 3/00**

(30) Priorität: **31.12.88 DE 3844480**

(43) Veröffentlichungstag der Anmeldung:
**11.07.90 Patentblatt 90/28**

(84) Benannte Vertragsstaaten:
**AT BE CH DE FR GB LI LU NL SE**

(71) Anmelder: **STEG STEINKÜHLER
ENTSORGUNGS-GESELLSCHAFT MBH
Teltower Strasse 4 + 6
D-4800 Bielefeld 17(DE)**

(72) Erfinder: **Steinkühler, Jochen
Hönerfeld 1 A
D-4800 Bielefeld 16(DE)**

(74) Vertreter: **Busse & Busse Patentanwälte
Postfach 1226 Grosshandelsring 6
D-4500 Osnabrück(DE)**

(54) **Vorrichtung zur Beseitigung von asbesthaltigen Gefahrstoffen.**

(57) Die Erfindung bezieht sich auf eine Vorrichtung 1 zur Beseitigung von asbesthaltigen Gefahrstoffen, insbesondere von schwach gebundenen Asbestprodukten von Wänden, Decken, Stahlkonstruktionen u. dgl. mit einem an einen Absauger 4 anschließbaren, mit Unterdruck beaufschlagbaren sowie mit Flüssigkeit befüllbaren Gefahrstoffsammelraum 2, der eine z.B. mit einem Absaugschlauch verbindbare Einfüllöffnung 3 aufweist, und mit einer verschließbare Entnahmeöffnung 27 zum z.B. Absacken des zur entsorgenden Sammelguts. Um insbesondere asbesthaltige Gefahrstoffe risikoloser beseitigen zu können, ist dem Sammelraum 2 ein mit einem Unterdruck beaufschlagbarer Aufbereitungsraum 13 nachgeordnet, der eine absperrbare Einfüllöffnung 20 für ein Binde- und/oder Zuschlagmittel, einen Mischer sowie die Entnahmeöffnung 27 umfaßt. Der Sammelraum 2 und der Aufbereitungsraum 13 sind zu einer geschlossenen Baueinheit zusammenschaltbar.

Fig. 1

## Vorrichtung zur Beseitigung von asbesthaltigen Gefahrstoffen

Die Erfindung bezieht sich auf eine Vorrichtung zur Beseitigung von asbesthaltigen Gefahrstoffen, insbesondere von schwach gebundenen Asbestprodukten von Wänden, Decken, Stahlkonstruktionen usw. anfallenden asbesthaltigen Gemischen u. dgl. in einer Ausbildung nach dem Oberbegriff des Anspruchs 1.

Die gesundheitsgefährdende Wirkung von Asbest und asbesthaltigen Gefahrstoffen macht es in Räumen und dgl. erforderlich, daß besondere Schutzmaßnahmen vorgenommen werden. So liegen inzwischen technische Richtkonzentrationswerte vor, die nach Herausgabe von gesetzlichen Verordnungen und Richtlinien z.B. in der Atmosphäre eines Arbeitsplatzes nicht mehr überschritten werden dürfen. Der Arbeitgeber hat danach stets dafür zu sorgen, daß an dem Arbeitsplatz die vorgenannten Werte unterschritten bleiben, was es wiederum erforderlich macht, Sanierungsarbeiten durchzuführen und z.B. Wände, Decken u. dgl. in Gebäuden von Gefahrstoffen zu befreien, wobei wiederum besondere Schutzmaßgaben zu beachten sind. Soweit möglich ist dabei zunächst naß zu arbeiten und das breiige Abfallmaterial sofort in reißfeste Plastiksäcke einzupacken, abzutransportieren und am Deponieort mit Zement zu binden. Ist dies nicht möglich, ist der anfallende Staub an der Entstehungsstelle sofort abzusaugen und die Entstehungsstelle, soweit möglich, staubdicht gegen den Raum abzukleiden.

Das Absaugen der vorhandenen Gefahrstoffe erfolgt herkömmlicherweise mit einer Vorrichtung der eingangs genannten Art, die ein Hochleistungsvakuumsauggerät hat, bei dem Sammelraum, Haupt- und Sicherheitsfilter sowie Pumpe fest in einem Block installiert sind. Durch Zuführung von in aller Regel Wasser wird ein Brei erstellt, der am Deponieort chargenweise mit Zement u. dgl. Bindemittel zu einer festen Masse gebunden wird, wonach das Entsorgungsmaterial mit gebundenen Gefahrstoffen Hausmülldeponien zugeführt werden kann. Aufgrund der Fülle von möglichen Fehlern, Leckagen und dgl. bei dieser Handhabung besteht jedoch die ernstliche Gefahr, daß asbesthaltige Gefahrstoffe in noch ungebundenem Zustand freigesetzt werden und damit in die Atmosphäre gelangen können, wonach von ihnen erhebliche Gesundheitsrisiken ausgehen.

Es ist Aufgabe der vorliegenden Erfindung, eine Vorrichtung der eingangs genannten Art zur Verfügung zu stellen, mit der mit größerer Sicherheit asbesthaltige Gefahrstoffe beseitigt werden können.

Zur Lösung dieser Aufgabe zeichnet sich die Vorrichtung nach der Erfindung durch die im kennzeichnenden Teil des Anspruchs 1 angegebenen Merkmale aus. Hinsichtlich wesentlicher, weiterer Ausgestaltungen der Vorrichtung nach der Erfindung wird auf die Ansprüche 2 bis 10 verwiesen.

Bei der Vorrichtung nach der Erfindung ist dem Gefahrstoffsammelraum unmittelbar der mit Unterdruck beaufschlagbare Aufbereitungsraum nachgeordnet, in dem der in aller Regel mit Flüssigkeit vermengte und damit als Brei zugeführte asbesthaltige Gefahrstoff sofort nach Anfall mit Binde- und/oder Zuschlagmitteln sonstiger Art versetzt werden kann, wobei Sammel-und Aufbereitungsraum derart ein abgeschlossenes System bilden, daß erst nach Beimengung der Binde- und Zuschlagmittel und in schon gebundenem Zustand der Verunreinigungsabfall über die Entnahmeöffnung nach außen gelangen kann. Aufgrund der Verarbeitung auch im Aufbereitungsraum unter Vakuum ist dabei sichergestellt, daß aufgrund der Geschlossenheit des Systems Gefahrstoffe mit noch gesundheitsgefährdender Wirkung nicht freigesetzt werden können.

Die Vorrichtung umfaßt zweckmäßigerweise mehrere Ventileinheiten, so daß auch der Aufbereitungsraum vollständig vom Sammelraum absperrbar, vorzugsweise druckdicht verschließbar ist. Durch die entsprechende Ansteuerung bzw. Betätigung der Ventile und durch entsprechende Ansteuerung der Antriebe der Förderschnecke ist es dabei möglich, daß kontinuierlich eine jeweils abgesaugte und gesumpfte Teilmenge an verunreinigten Gefahrenstoffen dem Aufbereitungsraum zugeführt wird, wonach durch Öffnen des Bindemittelabsperrventils unter Aufrechterhaltung des Vakuums Bindemittel zugesetzt wird. Nach dem Mischen bei geschlossenen Ventilen ist das so aufbereitete Entsorgungsgut chargenweise über die Entnahmeöffnung im gebundenen Zustand beispielsweise der sich an die Entnahmeöffnung anschließenden Endlossackeinrichtung mit Abschweißvorrichtung zuzuführen.

Zur weiteren Erläuterung der Erfindung wird auf die nachfolgende Beschreibung sowie die Zeichnung verwiesen. In der Zeichnung zeigen:

Fig. 1 in einer schematischen Seitenansicht ein Ausführungsbeispiel der Vorrichtung nach der Erfindung, und

Fig. 2 eine schematische Draufsicht auf das in Fig. 1 veranschaulichte Ausführungsbeispiel.

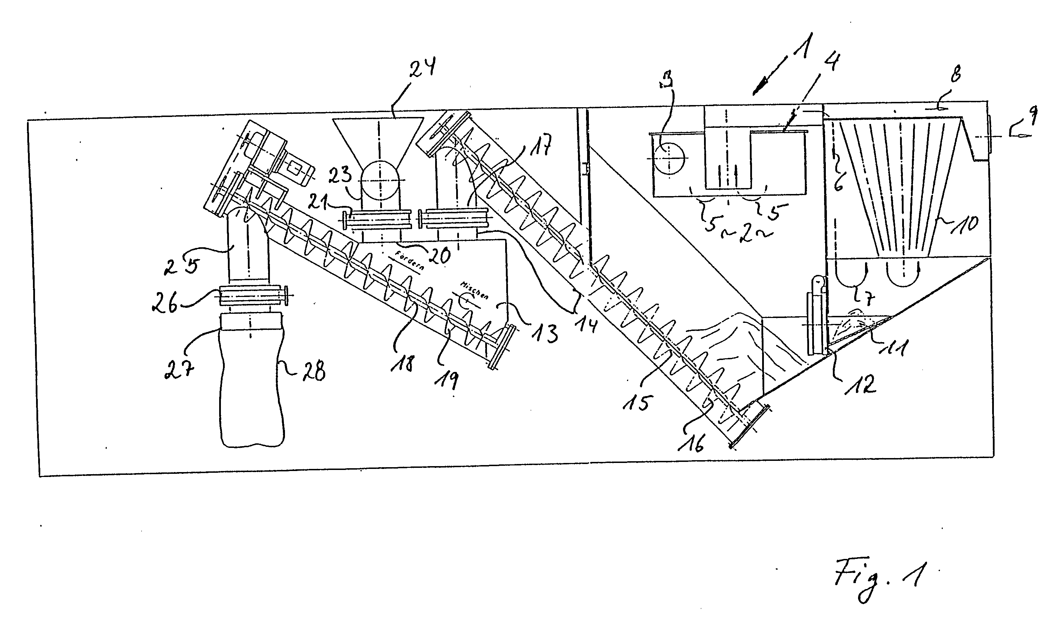

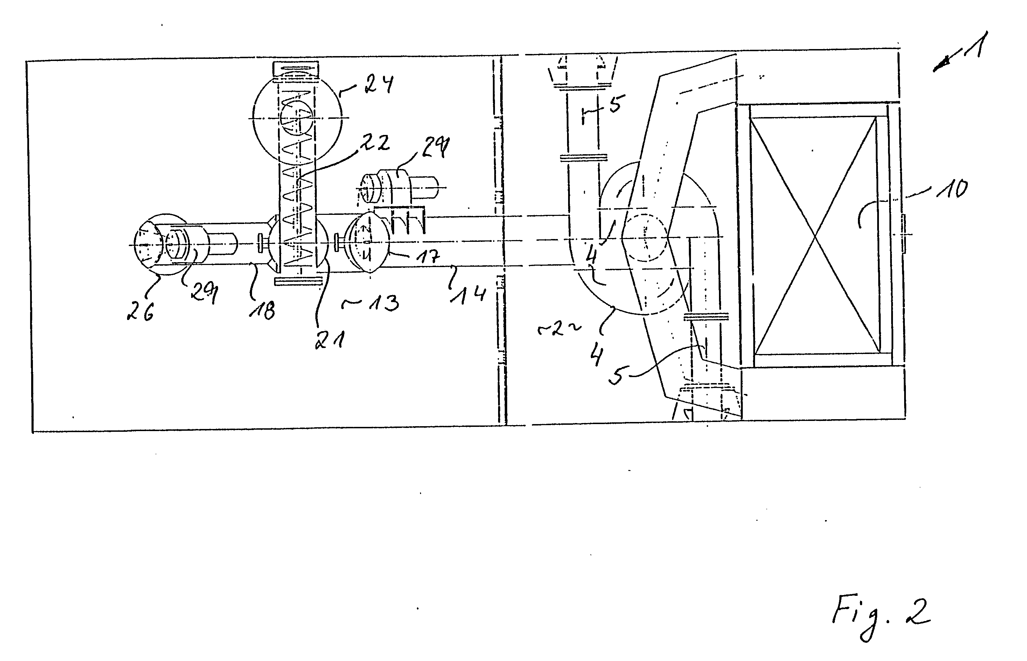

Die in der Zeichnung allgemein mit 1 bezifferte Vorrichtung zur Beseitigung der asbesthaltigen Gefahrstoffe ist in dem veranschaulichten Ausführungsbeispiel als Containeraggregat ausgebildet, das z.B. auf einem LKW anzuordnen und damit für den mobilen Einsatz geeignet ist. Die Vorrichtung umfaßt einen mit 2 bezifferten Gefahrstoffsammelraum, der über eine Einfüllöffnung 3, an den ein nicht näher gezeigter Absaugschlauch anschließbar ist, mit den abgesaugten Gefahrstoffen zu beschicken ist. Die Vorrichtung 1 hat ein Hochleistungsvakuumsauggerät 4 (Fig. 2), das entsprechend der Pfeile 5 das Entsorgungsmaterial ansaugt und die abgegebene Luft in Richtung der angedeuteten Pfeile 6,7,8 und 9 (Fig. 1) über einen Filter 10 an die Umgebung abgibt. Die von dem Filter 10 zurückgehaltenen Gefahrstoffmengen 11 können über eine Klappvorrichtung 12 dem Sammelraum 2 zur weiteren Entsorgung zugeführt werden.

An den Sammelraum 2 schließt sich ein allgemein mit 13 bezifferter Aufbereitungsraum an. Der Aufbereitungsraum 13 ist über den Sammelraum und damit gleichfalls vom Hochleistungsvakuumsauggerät 4 mit Unterdruck beaufschlagbar. Er ist über einen Kanal 14 mit dem Sammelraum 2 zu verbinden, in dem eine Förderschnecke 15 mit auf dem Schneckenmantel angeordneter Förderronde 16 sowie ein Absperrventil 17 derart angeordnet sind, daß der Aufbereitungsraum 13 vom Sammelraum 2 im wesentlichen druckdicht vom Sammelraum 2 abgetrennt werden kann. In dem Aufbereitungsraum 13 ist eine einen Mischer und Förderer bildende Förderschnecke 18 mit ebenfalls auf dem Schneckenmantel angeordneter Förderronde 19 angeordnet. Der Aufbereitungsraum 13 hat eine Einfüllöffnung 30 für ein Binde- und/oder Zuschlagmittel, die Teil einer ebenfalls ein Absperrventil 21 sowie eine Förderschnecke 22 aufweisenden Einfülleitung 23 ist. Die Förderschnecke 19 bzw. die Einfülleitung 23 ist über einen Trichter 24 mit dem Binde- und/oder Zuschlagmittel zu beschicken. Über das Absperrventil 21 ist die Einfüllöffnung derart abzuschließen, daß der Aufbereitungsraum 13 druckdicht nach außen hin abgesperrt ist.

An das in der Zeichnung obere Ende der Förderschnecke 19 schließt sich eine Entnahmeleitung 25 mit Absperrventil 26 sowie Entnahmeöffnung 27 an. In Schließstellung des Absperrventils 26 ist der Aufbereitungsraum zur Entnahmeöffnung 27 hin gleichfalls hermetisch abgeschlossen. Der Entnahmeöffnung 27 ist eine Endlossackfolie 28 zugeordnet. Über eine nicht im einzelnen sichtbare Schweißvorrichtung sind aus der Endlossackfolie Säcke zu bilden, die nach Aufnahme des Entsorgungsmateriverschlossen sind.

Im Betrieb der Vorrichtung stehen sowohl der Sammelraum 2 als auch der Aufbereitungsraum 13 unter Vakuum und die angesaugten asbesthaltigen Gefahrenstoffe gelangen zunächst in den Sammelraum 2, wo unter Beimengung von Wasser ein Brei vorliegt (sumpfen). Nach Anfahren der Förderschnecke 15 gelangt das Entsorgungsgut als Brei über den Kanal 14 und das Absperrventil 17 in den Aufbereitungsraum 13, in dem die Schnecke 18 still steht. Nach Freigabe des Ventils 21 werden über die Einfüllöffnung 20 Binde- und/oder sonstige Zugabemittel eingefüllt, wonach sämtliche Ventile geschlossen werden und die Förderschnecke 18 den eingefüllten Verunreinigungsbrei kontinuierlich mit den Binde- und/oder Zugabemitteln mischt und der Entnahmeleitung 25 zuführt. Nach entsprechender Betätigung des Ventiles 26 wird die entsprechende Menge des so mit Binde- und/oder Zugabemittel versetzten und gebundenen Entsorgungsgutes über die Entnahmeöffnung 27 und die Endlossackfolie 28 abgesackt und kann in ungefährlichem Zustand zur Deponie abtransportiert werden. Die vorzugsweise über Stellmotore 29 betätigten Ventile 17,21,26 werden dabei vorzugsweise derart geschaltet, daß jeweils Chargen dem Mischraum zugeführt, aufbereitet und entnommen werden, wozu sie taktweise jeweils von einer zentralen Steuereinheit geschaltet werden. Insgesamt verfügt damit die Vorrichtung über eine Taktschleuse, die sicherstellt, daß unter Vakuum das Entsorgungsgut sowohl im Sammelraum 2 als auch im Aufbereitungsraum 3 behandelt wird, wobei sichergestellt ist, daß die gesamte Vorrichtung stets derart ein geschlossenes System bildet, daß keine Verunreinigungspartikel mit noch gesundheitsgefährdender Wirkung entweichen können.

## Ansprüche

1. Vorrichtung (1) zur Beseitigung von asbesthaltigen Gefahrstoffen, insbesondere von schwach gebundenen Asbestprodukten von Wänden, Dekken, Stahlkonstruktionen u. dgl., mit einem an einen Absauger (4) anschließbaren, mit Unterdruck beaufschlagbaren sowie mit einer Flüssigkeit befüllbaren Gefahrstoffsammelraum (2), der eine z.B. mit einem Absaugeschlauch verbindbare Einfüllöffnung (3) aufweist, und mit einer verschließbaren Entnahmeöffnung (27) zum z.B. Absacken des zu entsorgenden Sammelguts, dadurch gekennzeichnet, daß dem Gefahrstoffsammelraum (2) ein mit einem Unterdruck beaufschlagbarer Aufbereitungsraum (13) nachgeordnet ist, der eine absperrbare Einfüllöffnung (20) für ein Binde- und/oder Zuschlagmittel, einen Mischer sowie die Entnahmeöffnung (27) umfaßt, und daß der Gefahrstoffsammelraum (2) und der Aufbereitungsraum (13) zu einer geschlossenen Baueinheit zusammenschaltbar sind.

2. Vorrichtung nach Anspruch 1, dadurch gekennzeichnet, daß der Aufbereitungsraum (13) über den Gefahrstoffsammelraum (2) mit Unterdruck beaufschlagbar ist.

3. Vorrichtung nach Anspruch 1 oder 2, dadurch gekennzeichnet, daß der Aufbereitungsraum (13) vom Gefahrstoffsammelraum (2) abtrennbar ist.

4. Vorrichtung nach einem der Ansprüche 1 bis 3, dadurch gekennzeichnet, daß der Aufbereitungsraum (13) mit dem Gefahr stoffsammelraum (2) über einen einen Förderer sowie ein Absperrventil (17) umfassenden Kanal (14) verbindbar ist.

5. Vorrichtung nach Anspruch 4, dadurch gekennzeichnet, daß der Mischer und der Förderer als Förderschnecken (15,18) mit auf dem Schnekkenmantel angeordneten Förderronden (16,19) ausgebildet sind.

6. Vorrichtung nach einem der Ansprüche 1 bis 5, dadurch gekennzeichnet, daß die Einfüllöffnung (20) für das Binde-und/oder Zuschlagmittel Teil einer ein Absperrventil (21) sowie eine Förderschnecke (30) mit auf dem Schneckenmantel angeordneter Förderronde umfassenden Einfülleitung (23) ist.

7. Vorrichtung nach einem der Ansprüche 1 bis 6, dadurch gekennzeichnet, daß die Entnahmeöffnung (27) Teil einer ein Absperrventil (26) aufweisenden, an das Ende des Mischers anschließbaren Entnahmeleitung (25) ist.

8. Vorrichtung nach Anspruch 7, dadurch gekennzeichnet, daß die Absperrventile (17,21,26) der Entnahmeleitung (25), des Kanals (14) sowie der Einfülleitung (23) zur Aufbereitung sowie Entnahme einer bestimmten Gefahrstoffsammelgutmenge taktweise einzeln betätigbar sind.

9. Vorrichtung nach Anspruch 8, dadurch gekennzeichnet, daß die Absperrventile (17,21,26) über Stellmotore (29) in ihre Offen- und Schließstellung überführbar sind.

10. Vorrichtung nach einem der Ansprüche 6 bis 9, dadurch gekennzeichnet, daß zumindest die Förderschnecken (15,18) im Sammel- und Aufbereitungsraum (2,13) mit einer aussteifenden Verrippung versehen sind.

Fig. 1

Fig. 2

EP 0 377 087 A2